# EUROPEAN PATENT APPLICATION

(11) **EP 1 512 718 A1**
(43) Date of publication of application: **09.03.2005**
(21) Application number: 03019363.5
(22) Date of filing: 27.08.2003
(51) Int. Cl.: C08L 23/06, C08L 23/08, C08L 51/06, C08L 83/04

(54) **Flame retardant polymer composition comprising nanofillers**

(71) Applicant: Borealis Technology Oy, 06101 Porvoo (FI)
(72) Inventor: Huhtala, Jarii, 00940 Helsinki (FI); Motha, Kshama, 00980 Helsinki (FI)
(74) Representative: Kador & Partner

(57) **Abstract**

The present invention relates to a flame retardant polymer composition comprising
(A) a polymer,
(B) a silicone-group containing compound,
(C) an inorganic filler, and
(D) a nanofiller.

Furthermore, the invention relates to the use of such a composition in a wire or cable and to a wire or cable having a layer comprising such a composition.

## Description

The present invention relates to a flame retardant polymer composition, more particularly to a flame retardant polymer composition for wires or cables which shows reduced dripping properties while retaining other properties such as hard inflamability, good extrudability or a good balance between flexibility and stiffness. Furthermore, the present invention relates to the use of the flame retardant polymer composition for the production of a flame retardant layer in wires or cables as well as to a wire or cable comprising a flame retardant composition according to the invention.

Polyolefins are inherently combustible materials. However, in many applications flame resistance is required such as for cables and wires in the Electronics and Electrical industries. To obtain polyolefin polymers with improved flame resistance it is known to incorporate specific additives into the polymer, such as halogen based chemicals, phosphate based chemicals or inorganic hydroxide/hydrated compounds. Each of these additives have their own deficiencies, such as incompatibility with the polyolefin, the need for high loading levels leading to poor mechanical properties and poor processability, the presence or emission of harmful, toxic or otherwise undesirable compounds and high costs.

For example, EP 0 393 959 provides a flame retardant polymer composition comprising a silicone fluid or gum filler and a non-hydrated/non-hydroxide inorganic filler. This composition shows good flame retardant properties due to the formation of a stable char layer on combustion. However, the dripping properties of these materials still need improvement because dripping of inflamed polymer boosts the progression of a fire.

It is therefore an object of the present invention to provide a flame retardant polymer composition which is having an improved dripping resistance while retaining good flame retardant properties as well as good mechanical properties, especially a good balance between flexibility and stiffness.

The present invention is based on the finding that this object can be achieved by a polymer composition which in addition to a polymer comprises a silicone-group containing compound and a nanofiller.

The present invention provides therefore a reduced dripping flame retardant polymer composition comprising
(A) a polymer,
(B) a silicone-group containing compound,
(C) an inorganic filler, and
(D) a nanofiller.

The inventive composition shows very good flame retardant properties combined with reduced dripping properties compared to materials known in the art. Furthermore, the incorporation of components (B), (C) and (D) into polyolefin (A) surprisingly leads to a synergistic effect with regard to the maximum heat release rate which is lower than in compositions different to the invention. Thus, with the inventive composition the danger of flashover due to sudden heat built-up leading to ignition of flammable materials in the vicinity of, for example, a wire comprising the inventive composition is reduced.

The choice and the composition of polymer (A) varies, depending on whether the inventive composition is used as a layer for wires or cables and depending on for what purpose the layer is used.

Of course, polymer (A) may also comprise a mixture of different polymers.

Suitable polymers for forming component (A) include polyolefins, polyesters, polyethers and polyurethanes. Elastomeric polymers may also be used such as, for example, ethylene/propylene rubber (EPR), ethylene/propylene-diene monomer rubbers (EPDN), thermoplastic elastomer rubber (TPE) and acrylonitrile butadiene rubber (NBR). Silane-crosslinkable polymers may also be used, i.e. polymers prepared using unsaturated silane monomers having hydrolisable groups capable of crosslinking by hydrolysis and condensation to form silanol groups in the presence of water and, optionally, a silanol condensation catalyst.

In a preferred embodiment component (A) is essentially formed by olefin, preferably ethylene, homo- or copolymers. These include, for example, homopolymers or copolymers of ethylene, propylene and butene and polymers of butadiene or iso isoprene. Suitable homopolymers and copolymers of ethylene include low density polyethylene, linear low, medium or high density polyethylene and very low density polyethylene. Suitable ethylene copolymers include such with of C₃- to C₂₀-alpha-olefins, C₁- to C₆- alkyl acrylates, C₁- to C₆- alkyl methacrylates, acrylic acids, methacrylic acids and vinyl acetates. Preferred examples for the alkyl alpha-olefins are propylene, 1-butene, 4-methyl-1-pentene, 1-hexene and 1-octene.

In a further preferred embodiment of the inventive composition component (A) comprises an olefin copolymer, preferably a polar olefin copolymer.

Polar groups are defined to be functional groups which comprise at least one element other that carbon and hydrogen.

Further preferred, the polar copolymer is an olefin/acrylate, preferably ethylene/acrylate, and/or olefin/acetate, preferably ethylene/acetate, copolymer.

It is further preferred that the polar copolymer comprises a copolymer of ethylene with one or more comonomers selected from C₁- to C₆-alkyl acrylates, C₁- to C₆-alkyl metacrylates, acrylic acids, metacrylic acids and vinyl acetate. The copolymer may also contain ionomeric structures (like in e.g. DuPont's Surlyn types).

Particularly preferred, the polar polymer comprises a copolymer of ethylene with C₁- to C₄-alkyl, such as methyl, ethyl, propyl or butyl, acrylates or vinylacetate.

In addition to ethylene and the defined comonomers, the copolymers may also contain further monomers. For example, the copolymers can contain up to 10% by weight of an olefin such as propylene.

The polar copolymer may be produced by copolymerisation of the polymer, e.g. olefin, monomers with polar comonomers but may also be a grafted polymer, e.g. a polyolefin in which one or more of the comonomers is grafted onto the polymer backbone, as for example acrylic acid-grafted polyethylene.

It is further preferred that the polar polymer makes up an amount of 30 parts by weight (pbw) or more, more preferred of 50 pbw or more, and still more preferred of 70 pbw or more, per 100 pbw of component (A).

The inventive reduced dripping flame retardant composition further comprises a silicone-group containing compound (B).

In a preferred embodiment of the inventive composition, component (B) is a silicone fluid or a gum, or an olefin, preferably ethylene, copolymer comprising at least one silicone-group containing comonomer, or a mixture of any of these compounds. Preferably, said comonomer is a vinylpolysiloxane, as e.g. a vinyl unsaturated polybishydrocarbylsiloxane.

Silicone fluids and gums suitable for use in the present inventions are known and include for example organopolysiloxane polymers comprising chemically combined siloxy units selected from the group consisting of R₃SiO_{0.5}, R₂SiO, R¹SiO_{1.5}, R¹R₂SiO_{0.5}, RR¹SiO, R¹₂SiO, RSiO_{1.5} and SiO₂ units and mixtures thereof in which each R represents independently a saturated or unsaturated monovalent hydrocarbon radical and each R¹ represents a radical such as R or a radical selected from the group consisting of hydrogen, hydroxyl, alkoxy, aryl, vinyl or allyl radicals.

The organopolysiloxane preferably has a viscosity of approximately 600 to 300 x 10⁵ centipoise at 25° C.

The silicone fluid or gum can contain fumed silica fillers of the type commonly used to stiffen silicone rubbers, e.g. up to 50% by weight.

Copolymers of an olefin, preferably ethylene, and at least one silicone-group containing comonomer preferably are a vinyl unsaturated polybis-hydrocarbylsiloxanes according to formula (I): 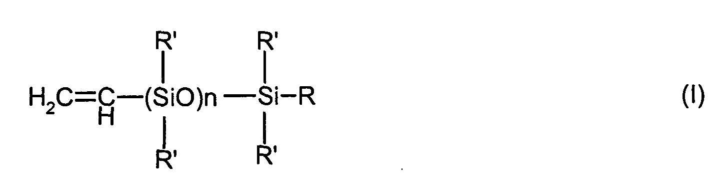 wherein n = 1 to 1000 and
R and R' independently are vinyl, alkyl branched or unbranched, with 1 to 10 carbon atoms; aryl with 6 or 10 carbon atoms; alkyl aryl with 7 to 10 carbon atoms; or aryl alkyl with 7 to 10 carbon atoms.

Such compounds e.g. are disclosed in WO 98/12253 the contents of which is herein enclosed by reference.

Preferably, component (B) is polydimethylsiloxane, preferably having a viscosity of preferably approximately 20 x 10⁶ centipoise at 25 °C, and/or a copolymer of ethylene and vinyl polydimethylsiloxane. These components (B) are preferred due to commercial availability.

The term "copolymer" as used herein is meant to include copolymers produced by copolymerization or by grafting of monomers onto a polymer backbone.

Component (C), i.e. the inorganic filler material suitable for use in the inventive composition, comprises all filler materials as known in the art. Component (C) may also comprise a mixture of any such filler materials. Examples for such filler materials are oxides, hydroxides and carbonates of aluminium, magnesium, calcium and/or barium.

Preferably, component (C) is an inorganic compound of a metal of groups 1 to 13, more preferred groups 1 to 3, still more preferred groups 1 and 2 and most preferred group 2, of the Periodic Table of Elements.

The numbering of chemical groups, as used herein, is in accordance with the IUPAC system in which the groups of the periodic system of the elements are numbered from 1 to 18.

Preferably, inorganic filler component (C) comprises a compound which is neither a hydroxide, nor a hydrated compound, more preferred comprises a compound selected from carbonates, oxides and sulphates, and most preferred comprises a carbonate.

Preferred examples of such compounds are calcium carbonate, magnesium oxide and huntite Mg₃Ca(CO₃)₄, with a particular preferred example being calcium carbonate.

Although inorganic filler (C) preferably is not a hydroxide, it may contain small amounts of hydroxide typically less than 5% by weight of the filler, preferably less than 3% by weight. For example there may be small amounts of magnesium hydroxide in magnesium oxide. Furthermore, although filler (C) is not a hydrated compound, it may contain small amounts of water, usually less than 3% by weight of the filler, preferably less than 1% by weight. However, it is most preferred that component (C) is completely free of hydroxide and/or water.

Preferably, component (C) of the inventive flame retardant polymer composition comprises 50 wt% or more of calcium carbonate and further preferred is substantially made up completely of calcium carbonate.

The inorganic filler may comprise a filler which has been surface-treated with an organosilane, a polymer, a carboxylic acid or salt etc. to aid processing and provide better dispersion of the filler in the organic polymer. Such coatings usually do not make up more than 3 wt.% of the filler.

Preferably, the compositions according to the present invention contain less than 3 wt.% of organo-metallic salt or polymer coatings.

Usually, the aspect ratio of the inorganic filler particles, i.e. the ratio between the widest and shortest dimension of the particles is 5 or less.

Preferably, the average particle size of inorganic filler (C) is 0.3 micrometer or more, more preferred 0.5 micrometer or more and still more preferred 1.0 micrometer or more.

Furthermore, the inventive composition comprises a nanofiller (D).

The expression "nanofiller" as used herein refers to substances with the ability to disperse in the matrix polymer in such a way that structures in the nanoscale dimension (1 to 700 nm) are observed. Usually, the particles of the nanofiller are dispersed in the polymer matrix so that the maximum thickness in at least one dimension is 10 nm or less, more preferably 8 nm or less.

Polymer matrices in which a nanofiller is dispersed as described above are usually designated as "nanocomposites". Thus, this term designates a multiphase material where one phase, i.e. the nanofiller, is dispersed in one or more other phases at a nanometer level in such a way that structures in the nanoscale dimension (1 to 700 nm) are observed. However, a nanocomposite material appears homogeneous on a microscopic scale. In the sense of this definition, the inventive polymer composition can also be designated as a nanocomposite.

In the present invention as nanofillers all particulate or layered materials may be used as long as they have the ability to disperse in the matrix polymer to form a nanocomposite.

For example, the nanofiller may be an inorganic material such as a clay-based layered material, a conventional sub-micron filler such as talc, calcium carbonate and mica with suitable small particle dimensions, preferably with an average particle size of below 10 nm (usually obtained by grinding), a nanovisker such as SiC, silica and special compounds such as carbon nanotubes.

Of course, nanofiller component (D) may also comprise a mixture of different nanofillers such as a mixture of a clay-based nanofiller and talc.

The dispersion of the above mentioned layered materials used as nanofillers in the polymer matrix is caused by the delamination or exfoliation of the layers of these materials.

In a preferred embodiment, nanofiller (D) is a clay-based layered inorganic, preferably silicate, material or material mixture. Useful such clay materials include natural, synthetic and modified phyllosilicates. Natural clays include smectite clays, such as montmorillonite, hectorite, mica, vermiculite, bentonite. Synthetic clays include synthetic mica, synthetic saponite, synthetic hectorite. Modified clays include fluoronated montmorillonite and fluoronated mica.

Usually, the particles of clay-based layered inorganic materials have an aspect ratio at 10 or more.

Layered silicates may be made organophilic before being dispersed in the polymer matrix by chemical modification such as by cation exchange treatment using alkyl ammonium or phosphonium cation complexes. Such cation complexes intercalate between the clay layers.

Preferably, a smectite-type clay is used which comprises montmorillonites, beidellites, nontronites, saponites as well as hectonites. The most preferred smectite-type clay is montmorillonite.

It is preferred that the amount of all components (B), (C) and (D) together does not exceed 75 wt% in the total composition. Further preferred, the amount of all components (B), (C) and (D) together is in the range of 10 to 75 wt%, more preferably 30 to 70 wt% and most preferably 35 to 50 wt%.

It is preferred that the amount of both components (C) and (D) together does not exceed 50 wt%, more preferred 40 wt% in the total composition.

It is preferred that silicone-group containing compound (B) is present in the composition in an amount of 0.5 to 40 %, more preferred 0.5 to 10 % and still more preferred 1 to 5 % by weight of the total composition.

It is further preferred that inorganic filler (C) is present in in the composition an amount of 5 to 70 wt%, more preferably 15 to 60 wt% and most preferably 20 to 40 wt%.

Furthermore, it is preferred that nanofiller (D) is present in an amount of 0.5 to 20 wt%, more preferably 1 to 10 wt% and most preferably 2 to 7 wt% in the total composition.

It is preferred that the nanofiller (D) is present in amount of 2 to 20 wt%, more preferably 5 to 17 wt% and most preferably 5 to 15 wt% of the total of fillers (C) and (D).

The composition may also comprise a metal stearate, preferably magnesium stearate. Further preferred, a stearate is added to the composition in a small amount, preferably of 5 wt. % or less, more preferably of 2 wt. % or less.

In a preferred embodiment the composition comprises an ethylene butyl acrylate copolymer, polydimethylsiloxane, calcium carbonate and alkyl quarternary ammonium montmorillonite. It is preferred that in this composition the ethylene butyl acrylate copolymer ranges from 50 to 60 wt% in the total composition, polydimethylsiloxane ranges from 1 to 5 wt% in the total composition, calcium carbonate ranges from 28 to 33 wt% in the total composition and alkyl quarternary ammonium montmorillonite ranges from 3 to 5 wt% in the total composition.

The time to drip after ignition is measured as defined in the Example section below.

The rate of maximum and average heat release rate (HRR max) (kW/m²) was measured using a cone calorimeter (35 kW/m², 3 mm plaques) according to ISO 5660-1V.

Tensile modulus is the ratio of stress to strain within the elastic region of the stress-strain curve, prior to the yield point. The tensile modulus is usually measured at very low strains where the proportionality of stress to strain is at its maximum. The shape of the stress-strain curves gives is indicative of the material's behaviour. A hard, brittle material shows a large initial slope and fails with little strain. A soft and tough material, on the other hand, exhibits a very small initial slope, but strain hardens and withstands larger strains before failure. Tensile modulus and strength were measured as indicated in the Example section below.

In addition to the above-mentioned components (A), (B), (C) and (D), the composition according to the present invention may contain additional ingredients, such as for example antioxidants and or UV stabilizers, in small amounts. Furthermore, also other mineral fillers such as glass fibres may be part of the composition.

The compositions according to the present invention may be cross-linkable. It is well known to cross-link thermoplastic polymer compositions using cross-linking agents such as organic peroxides and thus the compositions according to the present invention may contain a cross-linking agent in a conventional amount. Silane cross-linkable polymers may contain a silanol condensation catalyst.

The reduced dripping flame retardant polymer composition may be prepared by
a) preparation of a master batch comprising the nanofiller, additives and polymer followed by compounding with matrix polymer or
b) one step compounding of nanofiller, supplements and matrix polymer.

The nanofiller is preferably premixed with the polymer prior to compounding. For mixing, a conventional compounding or blending apparatus, e.g. a Banbury mixer, a 2-roll rubber mill, Buss-co-kneader or a twin screw extruder may be used. Preferably, the composition will be prepared by blending them together at a temperature which is sufficiently high to soften and plasticise the polymer, typically a temperature in the range of 120 to 200 °C.

The reduced dripping flame retardant composition according to the present invention can be used in many and diverse applications and products. The composition can for example be moulded, extruded or otherwise formed into mouldings, sheets, webbings and fibres.

As already mentioned above a particularly preferred use of the flame retardant composition according to the present invention is for the manufacture of wires or cables. The composition can be extruded about a wire or cable to form an insulating or jacketing layer or can be used as a blending compound.

In the following the present invention is further illustrated by means of examples.

### Examples:

### 1. Compounding of compositions

Flame retardant polymer compositions according to the invention and for comparative purpose were produced by compounding together the components in a Buss-co-kneader at a temperature of 150°C. The "Screw" speed was 85 rpm.

### 2. Produced compositions and materials used

For the production of the comparative compositions and the compositions in accordance with the invention, the following materials were used:
EBA 17 = Ethylenebutylacrylate copolymer containing 17 wt.% butylacrylate and having a melt flow rate at 190°C, 2.16 kg (MFR₂) of 1.2 g/10min,
Silicone (pure) = Polydimethylsilicone elastomer
Silicone (m.b.) = Masterbatch consisting of 40% Silicone (pure) and 60% low-density polyethylene,
Calcium Carbonate = Stearic acid (1%) coated calcium carbonate having an average particle size of 1.5 microns,
Nanofiller = alkyl quarternary ammonium montmorillonite, Cloisite 6A from Southern Clay Products.

The compositions were compounded as indicated above with amounts given in weight% of the components as indicated in Table 1.

### 3. Test methods

The melt flow rate of the composition was measured in accordance with ISO 1133 at 190°C and a weight of 2.16 kg.

The tensile strength and the tensile modulus were measured in accordance with ISO 527.

Cone calorimeter data were obtained from the test in accordance with ISO 5660-1V.

The time to drip of the compositions was measured in the following way:
The test bars are compression moulded at the conditions of 175°C / 195 bar, the conditioning time is 48 hours. The test specimens are cut from the compression moulded sheet. The dimensions of the test specimens are 130mm*13mm*3.2mm. Five parallel samples are tested. The test specimens are mounted vertically and ignited at the tip for 10 seconds, after which the ignition source is removed, and the time when the sample starts to drip is noted.

### 4. Results

A comparison between the properties of the compositions of Examples 1 and 2 in accordance with the invention and the compositions of Comparative Examples 1 to 4 shows that on the one hand improved flame retardant properties are achieved as concerns the dripping time and the HRR (max.) and, on the other hand, good mechanical properties are retained.

**Table 1:**

| Formulations | | | | |
|---|---|---|---|---|
| | Ex. 1 | Comp. Ex. 1 | Comp. Ex. 2 | Comp. Ex. 3 |
| EBA 17 | 54 | 54 | 58 | 66 |
| silicone (m.b.) | 12 | 12 | 12 | - |
| Ca-Carbonate | 30 | 34 | 30 | 30 |
| Nanofiller | 4 | - | - | 4 |

| Mechanical Properties | | | | |
|---|---|---|---|---|
| MFR (190°C, 2.16 kg) | 0.35 | 0.33 | 0.36 | 0.4 |
| Tensile Modulus, MPa | 205 | 145 | 152 | 151 |
| Tens. Strength at break (50 mm/min), MPa | 6.8 | 6.6 | 10.6 | 7 |

| Cone calorimeter data | | | | |
|---|---|---|---|---|
| HRR max., kW/m² | 302 | 342 | 380 | 344 |
| HRR average, kW/m² | 215 | 257 | 245 | 300 |
| CO (average) kg/kg | 0.0175 | 0.02 | 0.02 | 0.02 |

| Dripping time | | | | |
|---|---|---|---|---|
| Time to drip from ignition, s | 53 | 27 | 33 | 26.5 |

## Claims

1. A flame retardant polymer composition comprising
(A) a polymer,
(B) a silicone-group containing compound,
(C) an inorganic filler, and
(D) a nanofiller.

2. Composition according to claim 1 wherein polymer (A) is an olefin homo- and/or copolymer.

3. Composition according to claim 2 wherein polymer (A) is a polar olefin copolymer.

4. Composition according to any of the preceding claims wherein silicone-group containing compound (B) is a silicone fluid and/or gum, and/or an olefin copolymer comprising a silicone-group containing comonomer.

5. Composition according to any of the preceding claims, wherein inorganic filler (C) is neither a hydroxide nor a hydrated compound.

6. Composition according to any of the preceding claims wherein inorganic filler (C) is a carbonate, oxide and/or sulphate of a group 1 to 13 element of the Periodic System of the Elements.

7. Composition according to any of the preceding claims wherein nanofiller (D) is an inorganic clay-based layered material.

8. Composition according to any of the preceding claims wherein the amount of both components (C) and (D) does not exceed 50 wt%, preferably 40 wt%, in the total composition.

9. Composition according to any of the preceding claims wherein silicone-group containing compound (B) is present in the composition in an amount of 0.5 to 40 % by weight of the total composition.

10. Composition according to any of the preceding claims wherein inorganic filler (C) is present in the composition an amount of 5 to 70 wt% of the total composition.

11. Composition according to any of the preceding claims wherein nanofiller (D) is present in an amount of 0.5 to 20 wt% of the total composition

12. Use of a composition according to any of the preceding claims in a wire or cable.

13. A wire or cable having a layer comprising a composition according to any of claims 1 to 11.

## Amended claims

### Amended claims in accordance with Rule 86(2) EPC.

**1.** A flame retardant polymer composition comprising
(A) an olefin homo- and/or copolymer comprising a polar olefin copolymer,
(B) a silicone-group containing compound,
(C) an inorganic filler, and
(D) a nanofiller.

**2.** Composition according to any of the preceding claims wherein silicone-group containing compound (B) is a silicone fluid and/or gum, and/or an olefin copolymer comprising a silicone-group containing comonomer.

**3.** Composition according to any of the preceding claims, wherein inorganic filler (C) is neither a hydroxide nor a hydrated compound.

**4.** Composition according to any of the preceding claims wherein inorganic filler (C) is a carbonate, oxide and/or sulphate of a group 1 to 13 element of the Periodic System of the Elements.

**5.** Composition according to any of the preceding claims wherein nanofiller (D) is an inorganic clay-based layered material.

**6.** Composition according to any of the preceding claims wherein the amount of both components (C) and (D) does not exceed 50 wt%.

**7.** Composition according to any of the preceding claims wherein silicone-group containing compound (B) is present in the composition in an amount of 0.5 to 40 % by weight of the total composition.

**8.** Composition according to any of the preceding claims wherein inorganic filler (C) is present in the composition an amount of 5 to 70 wt% of the total composition.

**9.** Composition according to any of the preceding claims wherein nanofiller (D) is present in an amount of 0.5 to 20 wt% of the total composition

**10.** Use of a composition according to any of the preceding claims in a wire or cable.

**11.** A wire or cable having a layer comprising a composition according to any of claims 1 to 9.
